# EUROPEAN PATENT APPLICATION

(11) **EP 4 647 190 A1**
(43) Date of publication of application: **12.11.2025**
(21) Application number: 24222876.5
(22) Date of filing: 23.12.2024
(51) Int. Cl.: B21D 51/34, H01M 10/04, H01M 50/167, B21D 39/02

(54) **CRIMPING APPARTUS FOR BATTERY CELL**

(30) Priority: 09.05.2024 KR 20240060956
(71) Applicant: SAMSUNG SDI CO., LTD., Yongin-si, Gyeonggi-do 17084 (KR)
(72) Inventor: Kwon, Jun Hwan, Suwon-si, Gyeonggi-do 16678 (KR); Kang, Bong Geun, Suwon-si, Gyeonggi-do 16678 (KR); Yang, Jun Ho, Suwon-si, Gyeonggi-do 16678 (KR); Park, Hyun Suk, Suwon-si, Gyeonggi-do 16678 (KR); Jung, Jin Wook, Suwon-si, Gyeonggi-do 16678 (KR); Kim, Young Ho, Suwon-si, Gyeonggi-do 16678 (KR)
(74) Representative: Gulde & Partner

(57) **Abstract**

The present disclosure relates to a crimping apparatus for a battery cell, and the technical object to be achieved is to provide a crimping apparatus for a battery cell capable of improving the formation quality of a battery cell. To this end, the present disclosure provides a crimping apparatus for a battery cell, which includes a lower jig disposed around a circumference of a battery can, a first upper jig which descends to come into contact with the lower jig above the battery can and presses and moves the lower jig toward the battery can, and a second upper jig which is disposed inside the first upper jig, descends along with the first upper jig, and presses an end portion of the battery can downward to bend the end portion toward a cap assembly.

## Description

### FIELD

Aspects of embodiments of the present disclosure relates to a crimping apparatus which crimps a battery cell.

### BACKGROUND

In general, secondary batteries are capable of charging and discharging unlike primary batteries that cannot be charged. Low-capacity secondary batteries are used in small portable electronic devices such as smartphones, feature phones, notebook computers, digital cameras, and camcorders, and large-capacity secondary batteries are widely used as power sources for driving motors of hybrid vehicles, electric vehicles, and the like and as batteries for power storage. Such a secondary battery includes an electrode assembly including a positive electrode and a negative electrode, a case for accommodating the electrode assembly, an electrode terminal connected to the electrode assembly, and the like.

Secondary batteries may be used as a battery pack formed of a plurality of unit battery cells connected in series and/or parallel to provide high energy density. The battery pack may be formed by connecting electrode terminals of a plurality of unit batteries to satisfy the required power, for example, to implement a high-power secondary battery of an electric vehicle.

A battery cell may include an electrode assembly, a battery can, and a cap assembly. The electrode assembly may be accommodated in the battery can, and the cap assembly may be coupled to an opening of the battery can. A crimping process for sealing the battery cell may be performed by bending and bringing an end portion of the battery can into close contact with the cap assembly.

The above-described information disclosed in the technology that forms the background of the present disclosure is only intended to improve understanding of the background of the present disclosure, and thus may include information that does not constitute the related art.

### SUMMARY

An aspect of embodiments of the present disclosure is directed to providing a crimping apparatus for a battery cell capable of improving the formation quality of a battery cell.

These and other aspects and features of the present disclosure will be described in or will be apparent from the following description of some embodiments of the present disclosure.

A crimping apparatus for a battery cell according to one or more embodiments of the present disclosure for achieving the above-described technical object includes a lower jig disposed around a circumference of a battery can, a first upper jig which descends into contact with the lower jig above the battery can and presses and moves the lower jig toward the battery can, and a second upper jig which is disposed inside the first upper jig, descends along with the first upper jig, and presses an end portion of the battery can downwardly to bend the end portion toward a cap assembly.

The lower jig may include split jigs which are split into a plurality of pieces along the circumference of the battery can and move toward the battery can in conjunction with the descent of the first upper jig.

The lower jig may include a lower jig body having a first inner diameter allowing the second upper jig to be inserted into the lower jig body and disposed around the circumference of the battery can, an upper jig contact surface which is formed on an outer circumferential portion of the lower jig body and comes into contact with the first upper jig while the first upper jig descends, and a can fixing part which is formed to protrude from an inner circumferential portion of the lower jig body and comes into contact with the battery can when the first upper jig descends.

The upper jig contact surface may include an inclined surface which is formed on the outer circumferential portion of the lower jig body to be inclined outwardly and comes into contact with the first upper jig while the first upper descends and a vertical extending surface which is formed below the inclined surface to extend vertically and comes into contact with the first upper jig while the first upper jig descends.

The inclined surface may include a first inclined surface which is formed at an upper portion of the lower jig body and with which contact starts when the first upper jig descends, and a second inclined surface which has a greater outer diameter than the first inclined surface, is continuously formed at the bottom of the first inclined surface, and has an inclination angle for guiding the first upper jig toward the vertical extending surface.

The inclined surface may be formed at a first inclination angle such that the lower jig moves a first horizontal distance toward the battery can when the first upper jig descends a first vertical distance while in contact with the inclined surface.

The vertical extending surface may include a first extending surface which is continuously formed at the bottom of the inclined surface and with which the first upper jig, which is descending, continuously comes into contact after passing the inclined surface and a second extending surface which is continuously formed at the bottom of the first extending surface and comes into contact with the first upper jig that has passed the first extending surface.

The can fixing part may include a can support part which has a smaller inner diameter than the first inner diameter and is in contact with the circumference of the battery can and a beading insertion part formed to protrude from an inner circumferential portion of the can support part to be inserted into a beading part of the battery can.

The can support part may include a first can support part which has a second inner diameter that is smaller than the first inner diameter and is in contact with the circumference of the battery can below the beading insertion part and a second can support part which is in contact with the circumference of the battery can above the beading insertion part and has a third inner diameter that is smaller than the first inner diameter.

The lower jig body may have a first thickness in a horizontal direction, the first can support part may have the second inner diameter that is smaller than the first inner diameter and form a second thickness that is greater than the first thickness with the lower jig body in the horizontal direction, and the second can support part may have the third inner diameter that is smaller than the first inner diameter and form a third thickness that is greater than the first thickness with the lower jig body in the horizontal direction.

The third inner diameter may be greater than the second inner diameter such that a gap is formed between the second can support part and the battery can when the first can support part comes into contact with the battery can.

The beading insertion part and the vertical extending surface may be located on a same horizontal line such that a force of the first upper jig pressing the vertical extending surface in the horizontal direction is applied toward a contact portion between the beading part and the beading insertion part.

The beading insertion part and an upper portion of the vertical extending surface may be located on a same horizontal line.

The vertical extending surface may include a first extending surface which is formed below the inclined surface, horizontally comes into contact with the first upper jig which is descending, and is located on a same horizontal line as the beading insertion part and a second extending surface which is formed under the first extending surface to have the same vertical length as the first extending surface and horizontally comes into contact with a lower portion of the first upper jig which has passed the first extending surface.

When the second extending surface is in contact with a first portion of the first upper jig, the first extending surface may be in contact with a second portion located above the first portion.

The lower jig may further include an extending portion which is formed to extend radially below the upper jig contact surface and comes into contact with a guide unit to guide radial movement of the lower jig.

The first upper jig may include a first upper jig body installed to be movable toward the lower jig, a jig pressing surface which is formed on an inner circumferential portion of the first upper jig body, and when descending, comes into contact with the lower jig and presses the lower jig toward the battery can, an upper jig coupling part which is formed at an upper portion of the first upper jig body and to which the second upper jig is fixed, and an insertion space which is formed between the jig pressing surface and the second upper jig, which face each other, to be downwardly open and into which the lower jig is inserted when the first upper jig body descends.

The jig pressing surface may include an inclined pressing surface formed on a lower portion of an inner circumferential portion of the first upper jig body to be inclined, and when the first upper jig body descends, comes into contact with an inclined surface formed on the lower jig and presses and moves the lower jig toward the battery can and a horizontal pressing surface which is formed on the inclined pressing surface to extend vertically and is in contact with a vertical extending surface formed on the lower jig in a horizontal direction.

The second upper jig may include a second upper jig body fixed inside the first upper jig, a seating surface which is formed at a lower end of the second upper jig body, is in contact with an upper surface of the can fixing part formed on the lower jig, and has the same inner diameter as the can fixing part, a downward pressing surface which is formed inside the seating surface to be concave upwardly and presses an upper end portion of the battery can protruding upwardly from the can fixing part toward the cap assembly, and a rounded surface which is formed between the seating surface and the downward pressing surface to be rounded and comes into contact with the upper end portion of the battery can to bend or tilt the upper end portion of the battery can toward the downward pressing surface.

The crimping apparatus for a battery cell according to the present disclosure may further include a guide unit which guides the movement of the lower jig toward the battery can.

The guide unit may include a first housing in which the lower jig is seated, a second housing which is disposed on the first housing with the lower jig interposed therebetween and forms a guide surface, which guides the movement of the lower jig, between the second housing and the first housing, and a jig return device which returns the lower jig which has moved toward the battery can to an initial position.

The first housing may include a first housing body having the shape of a disc in which a hole is formed in a central portion thereof and a first guide groove which is formed to be recessed in an upper portion of the first housing body, through which the lower jig passes, and which comes into contact with the lower jig to guide radial movement of the lower jig.

The second housing may include a second housing body having a cylindrical shape allowing the first upper jig to be inserted into the second housing body, a descent guide surface which is formed on an inner circumferential portion of the second housing body and is in contact with an outer surface of the first upper jig to guide the descent of the first upper jig, and a second guide groove which is formed to extend radially in a lower portion of the second housing body, through which the lower jig passes, and which is in contact with the lower jig to guide radial movement of the lower jig.

The jig return device may include a spring block coupled to the lower jig on a radial outer side of the second housing and configured to move with the lower jig and an elastic member which is disposed between the second housing and the spring block and elastically compressed in conjunction with the movement of the spring block when the lower jig moves toward the battery can.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a schematic cross-sectional view illustrating a main portion of a crimping apparatus for a battery cell according to at least one embodiment of the present disclosure;
FIG. 2 is a schematic perspective view illustrating a lower jig according to at least one embodiment of the present disclosure;
FIG. 3 is a schematic perspective view illustrating a state in which a first split jig, a second split jig, and a third split jig are spaced apart from each other according to at least one embodiment of the present disclosure;
FIG. 4 is a schematic perspective view illustrating the second split jig according to at least one embodiment of the present disclosure;
FIG. 5 is a plan view of FIG. 2;
FIG. 6 is a cross-sectional view along line A-A' of FIG. 5;
FIG. 7 is an enlarged view illustrating a main portion of FIG. 6;
FIG. 8 is a conceptual view for describing a contact structure between the lower jig and a battery cell according to at least one embodiment of the present disclosure;
FIG. 9 is a schematic cross-sectional view illustrating a main portion of a lower jig according to at least another embodiment of the present disclosure;
FIG. 10 is a schematic cross-sectional view illustrating main portions of a first upper jig and a second upper jig according to at least one embodiment of the present disclosure;
FIG. 11 is a schematic cross-sectional view illustrating a main portion of the first upper jig according to at least one embodiment of the present disclosure;
FIG. 12 is a schematic cross-sectional view illustrating a main portion of the second upper jig according to at least one embodiment of the present disclosure;
FIG. 13 is an enlarged view illustrating the main portion of FIG. 12;
FIG. 14 is a schematic cross-sectional view illustrating a main portion of a second upper jig according to at least another embodiment of the present disclosure;
FIG. 15 is a schematic cross-sectional view illustrating a main portion of a guide unit according to at least one embodiment of the present disclosure;
FIG. 16 is an exploded schematic perspective view illustrating a main portion of the guide unit according to at least one embodiment of the present disclosure;
FIG. 17 is a schematic perspective view illustrating main parts such as the lower jig, a first housing, and a second housing according to at least one embodiment of the present disclosure;
FIG. 18 is an exploded schematic perspective view illustrating the main parts such as the lower jig, the first housing, and the second housing according to at least one embodiment of the present disclosure;
FIG. 19 is a schematic plan view illustrating the first housing according to at least one embodiment of the present disclosure;
FIG. 20 is a schematic plan view illustrating the second housing according to at least one embodiment of the present disclosure;
FIG. 21 is a schematic side view illustrating a spring block according to at least one embodiment of the present disclosure;
FIG. 22 is a schematic cross-sectional view illustrating a main portion in an initial state of the crimping apparatus for a battery cell according to at least one embodiment of the present disclosure;
FIG. 23 is a schematic cross-sectional view illustrating a main portion in a state in which the first upper jig moves downwardly and comes into contact with an inclined surface of the lower jig according to at least one embodiment of the present disclosure;
FIG. 24 is a schematic cross-sectional view illustrating a main portion in a state in which the first upper jig further moves downwardly, reaches a lower end of the inclined surface of the lower jig, and starts to come into contact with a vertical extending surface according to at least one embodiment of the present disclosure; and
FIG. 25 is a schematic cross-sectional view illustrating a main portion in a state in which the first upper jig further moves downwardly and comes into contact with the vertical extending surface according to at least one embodiment of the present disclosure.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

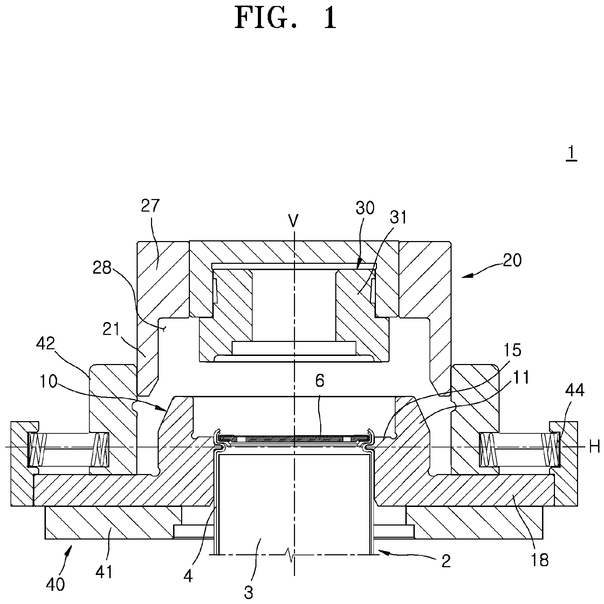

FIG. 1 is a schematic cross-sectional view illustrating a main portion of a crimping apparatus for a battery cell according to at least one embodiment of the present disclosure.

Referring to FIG. 1, a crimping apparatus 1 for a battery cell 2 according to one embodiment of the present disclosure includes a lower jig 10, a first upper jig 20, and a second upper jig 30.

The battery cell 2 may include an electrode assembly 3, a battery can 4, and a cap assembly 6. In a state in which the electrode assembly 3 is accommodated in the battery can 4, the cap assembly 6 may be coupled to an opening of the battery can 4. In one embodiment of the present disclosure, a state in which the opening of the battery can 4 is located at the top of the battery cell 2 is disclosed.

The cap assembly 6 may be disposed above a beading part 5 concavely formed along a circumference of the battery can 4. The battery cell 2 may be sealed by bending and bringing an upper end portion of the battery can 4 located above the cap assembly 6 into close contact with the cap assembly 6. The present disclosure relates to a crimping apparatus configured to seal the battery cell 2 by bending an end portion of the battery can 4 toward the cap assembly 6.

The battery cell 2 may function as a unit structure configured to store and supply power in a battery pack. Hereinafter, an example of the battery cell 2 which is a cylindrical lithium-ion secondary battery will be described. However, the present disclosure is not limited thereto, and the battery cell 2 may be a lithium polymer battery, or a prismatic battery.

In the drawing, the battery can 4 is illustrated as having a circular shape, but the present disclosure is not limited thereto, and a case may have one of various shapes such as a prismatic shape and pouch shape. In addition, the battery can 4 may be formed of a metal, such as aluminum, an aluminum alloy, or steel plated with nickel, or a laminated film or plastic constituting a pouch.

In at least one embodiment of the present disclosure, the cylindrical battery cell 2 is disclosed. The meaning of "moving toward the battery can 4 from the outside of the battery can 4" is "moving toward the inside of the battery cell 2 or a central axis of the battery cell 2. An inward direction of the battery cell 2, a central axis direction of the battery cell 2, and a direction toward the battery can 4 may mean the same direction. Hereinafter, for the sake of convenience in description, toward the battery can 4, toward a center of the battery can 4, and the inward direction of the battery can 4 are used interchangeably.

The lower jig 10 is disposed around the circumference of the battery can 4. The lower jig 10 moves toward the battery can 4 in conjunction with the descent of the first upper jig 20, comes into contact with the circumference of the battery can 4, and holds the battery can 4.

The first upper jig 20 descends from above the battery can 4 to come into contact with the lower jig 10. The first upper jig 20 may be disposed above the lower jig 10 and spaced apart from the lower jig 10 and move downwardly to come into contact with the lower jig 10. When the first upper jig 20 further descends while in contact with the lower jig 10, the first upper jig 20 presses and moves the lower jig 10 toward the battery can 4.

The second upper jig 30 is disposed inside the first upper jig 20 and descends along with the first upper jig 20. The second upper jig 30 may be disposed above the battery can 4 and spaced apart from the battery can 4, and may descend to come into contact with the upper end portion of the battery can 4. When the second upper jig 30 further descends while in contact with the upper end portion of the battery can 4, the second upper jig 30 bends the upper end portion of the battery can 4 by pressing the upper end portion of the battery can 4 downwardly toward the cap assembly 6.

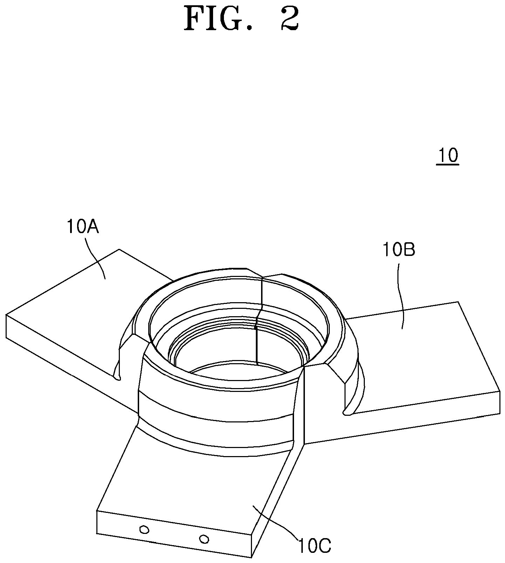

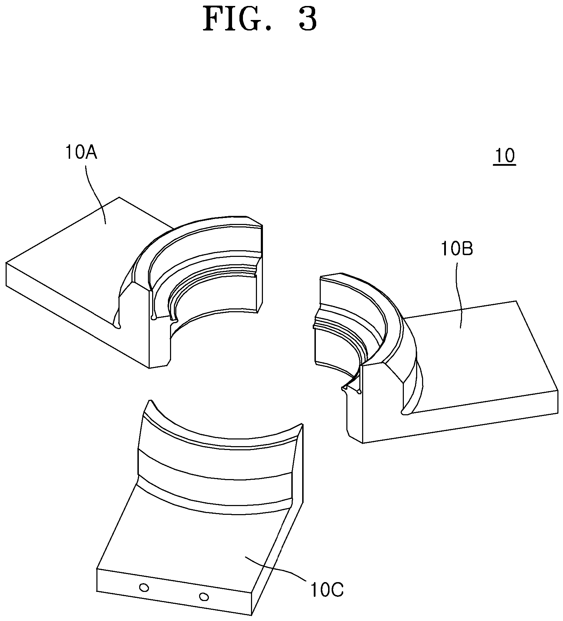

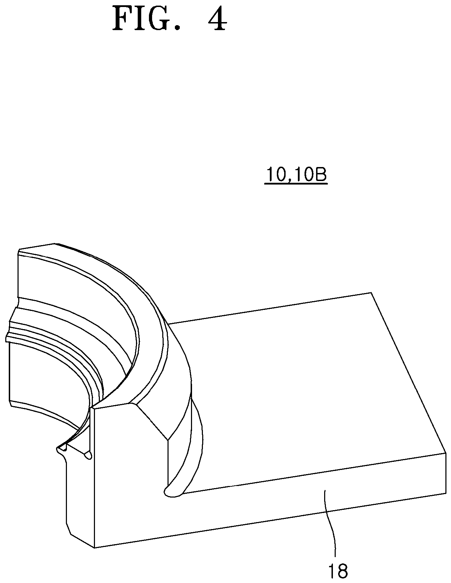

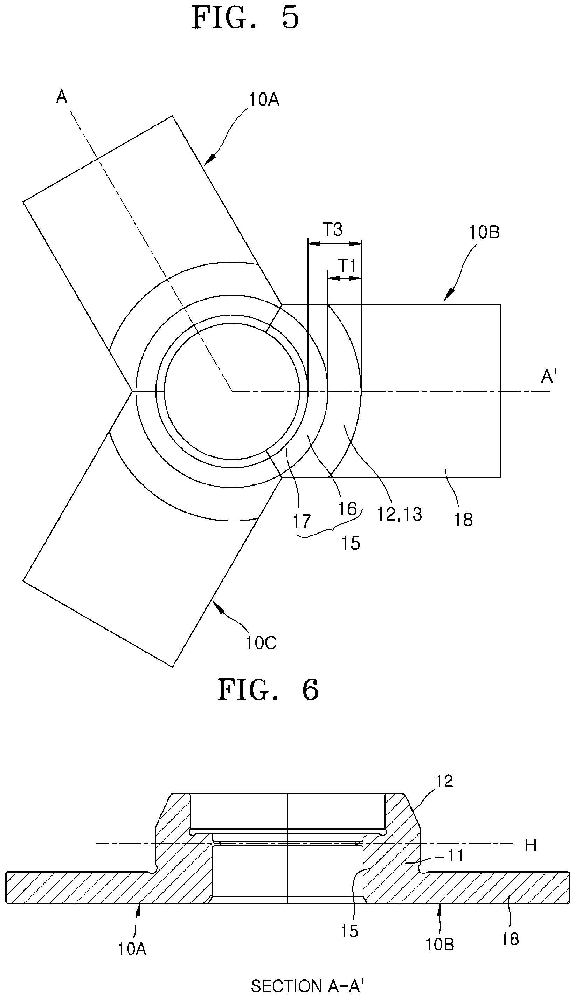

FIG. 2 is a schematic perspective view illustrating the lower jig according to at least one embodiment of the present disclosure, and FIG. 3 is a schematic perspective view illustrating a state in which a first split jig, a second split jig, and a third split jig are spaced apart from each other according to one embodiment of the present disclosure. FIG. 4 is a schematic perspective view illustrating the second split jig according to at least one embodiment of the present disclosure, and FIG. 5 is a plan view of FIG. 2.

Referring to FIGS. 2 to 5, the lower jig 10 according to at least one embodiment of the present disclosure may include a plurality of split jigs 10A, 10B, and 10C which are divided into a plurality of pieces along the circumference of the battery can 4. The split jigs 10A, 10B, and 10C may move closer to each other and toward the battery can 4 in conjunction with the descent of the first upper jig 20. The lower jig 10 may include a first split jig 10A, a second split jig 10B, and a third split jig 10C.

The first split jig 10A may have an arc-shaped cross-sectional shape facing a portion of the battery can 4 in a circumferential direction. The second split jig 10B may have an arc-shaped cross-sectional shape facing another portion of the battery can 4 in the circumferential direction. The third split jig 10C may have an arc-shaped cross-sectional shape facing the remaining portion of the battery can 4 in the circumferential direction. The first split jig 10A, the second split jig 10B, and the third split jig 10C may have the same arc-shaped cross-sectional shape in a circumferential direction. The split jigs 10A, 10B, and 10C may all have a cross-sectional shape in the form of an arc with an angle of 120°.

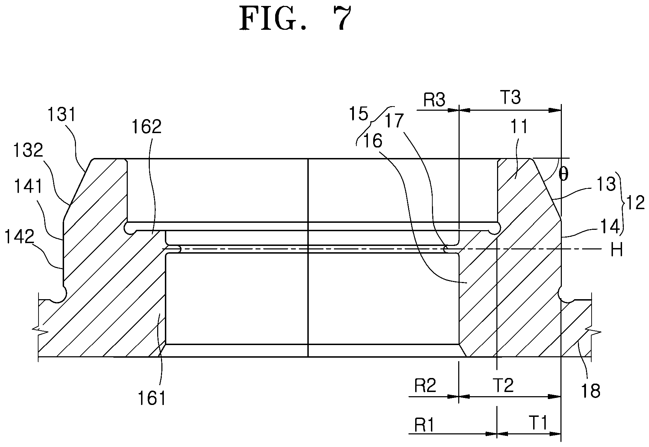

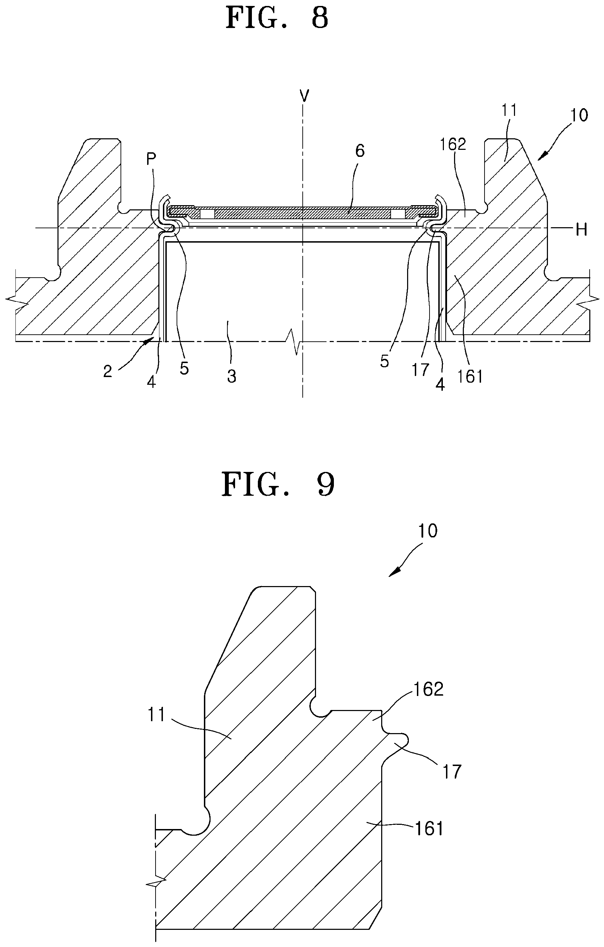

FIG. 6 is a cross-sectional view along line A-A' of FIG. 5, FIG. 7 is an enlarged view illustrating a main portion of FIG. 6, and FIG. 8 is a conceptual view for describing a contact structure between the lower jig and the battery cell according to at least one embodiment of the present disclosure.

Referring to FIGS. 6 to 8, the lower jig 10 according to at least one embodiment of the present disclosure may include a lower jig body 11, an upper jig contact surface 12, and a can fixing part 15. The first split jig 10A may have a lower jig body 11, an upper jig contact surface 12, and a can fixing part 15. Each of the second split jig 10B and the third split jig 10C may also have a lower jig body 11, an upper jig contact surface 12, and a can fixing part 15.

The lower jig body 11 may have a shape corresponding to a portion of a cylinder in the circumferential direction. The lower jig body 11 may have a first inner diameter R1 allowing the second upper jig 30 to be inserted into the lower jig body 11 and may be disposed around the circumference of the battery can 4.

The upper jig contact surface 12 may be a portion that comes into contact with the first upper jig 20 and may be formed on an outer circumferential portion of the lower jig body 11. The first upper jig 20 may descend and come into contact with the upper jig contact surface 12. The first upper jig 20 sequentially comes into contact with an upper portion and a lower portion of the upper jig contact surface 12. A movement state of the lower jig 10 may be changed according to a direction in which the upper jig contact surface 12 comes into contact with the first upper jig 20.

Referring to FIG. 7, the upper jig contact surface 12 may include an inclined surface 13 and a vertical extending surface 14.

The inclined surface 13 may be formed on an upper portion of the lower jig body 11 to be inclined outwardly. The inclined surface 13 may be continuously formed along an upper circumference of an outer circumferential portion of the lower jig 10. "Being formed to be inclined outwardly" means "having a downward inclination angle while proceeding toward the outside in a radial direction."

Referring to FIG. 7, the inclined surface 13 according to at least one embodiment of the present disclosure may include a first inclined surface 131 and a second inclined surface 132.

The first inclined surface 131 may be a portion at which contact starts when the first upper jig 20 descends and may be formed at an upper end portion of the lower jig body 11. The first inclined surface 131 may mean a surface contact portion which initially comes into contact with an inclined pressing surface 23 (which will be described below) of the first upper jig 20. The first upper jig 20 may be disposed such that the inclined pressing surface 23 is located directly above the first inclined surface 131. The first inclined surface 131 may have an inclination angle for guiding the first upper jig 20 toward the second inclined surface 132.

When the first upper jig 20 descends, the inclined pressing surface 23 of the first upper jig 20 may come into contact with the first inclined surface 131 and may sequentially move toward the second inclined surface 132 along the first inclined surface 131 and toward the vertical extending surface 14 along the second inclined surface 132.

The second inclined surface 132 may have an outer diameter greater than an outer diameter of the first inclined surface 131 and may be continuously formed at the bottom of the first inclined surface 131. The second inclined surface 132 may form the inclination angle for guiding the first upper jig 20 toward the vertical extending surface 14. The second inclined surface 132 may have an inclination angle the same as or different from the inclination angle of the first inclined surface 131. In one embodiment of the present disclosure, an example in which the first inclined surface 131 and the second inclined surface 132 have the same first inclination angle θ is disclosed.

The inclined surface 13 may have the first inclination angle θ. At least one -of the first inclined surface 131 and the second inclined surface 132 may have the first inclination angle θ. When the inclined surface 13 is formed to have the first inclination angle θ, and the first upper jig 20 is moved downwardly a first vertical distance DL1 in a state of being in contact with the inclined surface 13, the lower jig 10 may be moved a first horizontal distance DR1 toward the battery can 4.

When the inclined surface 13 is formed to have the first inclination angle θ, the lower jig 10 may be moved toward the center of the battery can 4 in proportion to the downward displacement of the first upper jig 20. Accordingly, the movement displacement and speed of the lower jig 10 may be reliably adjusted by controlling the downward displacement and speed of the first upper jig 20.

The vertical extending surface 14 may be formed at the bottom of the inclined surface 13 or below the inclined surface 13 to extend vertically. The vertical extending surface 14 may be continuously formed along the outer circumferential portion of the lower jig 10. The first upper jig 20 may sequentially come into contact with the inclined surface 13 and the vertical extending surface 14 while descending from directly above the lower jig 10.

The vertical extending surface 14 may horizontally face an inner circumferential portion of the first upper jig 20 which is descending. The vertical extending surface 14 may horizontally come into contact with the inner circumferential portion of the first upper jig 20, and may be pressed toward the center of the battery can 4 by the first upper jig 20.

While the first upper jig 20 moves downwardly along the inclined surface 13, the lower jig 10 may be moved toward the center of the battery can 4 and may come into close contact with the circumference of the battery can 4. While the first upper jig 20 moves downwardly along the vertical extending surface 14, a contact area between the lower jig 10 and the first upper jig 20 gradually increases, and the lower jig 10 may more stably support the circumference of the battery can 4. While the first upper jig 20 moves downwardly along the vertical extending surface 14, the lower jig 10 may not move anymore toward the center of the battery can 4.

A beading insertion part 17 (which will be described below) of the lower jig 10 is a portion inserted into the beading part 5 of the battery can 4. A supporting force which presses the battery can 4 toward the center at a contact portion P between the beading insertion part 17 and the beading part 5 to restrict the movement of the battery can 4 may primarily act.

The vertical extending surface 14 and the beading insertion part 17 may be located on the same horizontal line H. When the vertical extending surface 14 and the beading insertion part 17 are located on the same horizontal line H, it is possible to reduce or prevent a force horizontally applied to the vertical extending surface 14 by the first upper jig 20 from acting as a moment (rotational force) on the contact portion P. In this case, the force horizontally applied to the vertical extending surface 14 by the first upper jig 20 may act as a force horizontally applied to the contact portion P located on the same horizontal line H. Accordingly, the battery can 4 can be stably supported using the beading insertion part 17.

Referring to FIG. 7, the vertical extending surface 14 according to at least one embodiment of the present disclosure may include a first extending surface 141 and a second extending surface 142.

The first extending surface 141 may be continuously formed at the bottom of the inclined surface 13. The first extending surface 141 may horizontally come into contact with the first upper jig 20 which is descending. The second extending surface 142 may be formed at the bottom of the first extending surface 141 to have the same vertical length as the first extending surface 141. The second extending surface 142 may horizontally come into contact with a lower portion of the first upper jig 20 that passed the first extending surface 141. An upper half of the vertical extending surface 14 may be referred to as the first extending surface 141, and a lower half of the vertical extending surface 14 may be referred to as the second extending surface 142.

The first upper jig 20, which is descending, may pass the inclined surface 13 and sequentially come into contact with the first extending surface 141 and the second extending surface 142. A horizontal pressing surface 24 (which will be described below) formed on the first upper jig 20 may come into contact with the first extending surface 141. The horizontal pressing surface 24 may further descend and may be in contact with the first extending surface 141 and the second extending surface 142 at the same time.

The horizontal pressing surface 24 of the first upper jig 20 may include a first portion 25 (which will be described below) located at a lower end portion and a second portion 26 (which will be described below) located above the first portion 25. The first extending surface 141 may be in contact with the first portion 25. In a state in which the first portion 25 further descends and comes into contact with the second extending surface 142, the second portion 26 may be in contact with the first extending surface 141. As the first upper jig 20 descends while in contact with vertical extending surface 14, a contact area between the first upper jig 20 and the vertical extending surface 14 may gradually increase.

As the first upper jig 20 descends, the inclined surface 13 should be pressed by a stronger force for the lower jig 10 to move laterally. As the first upper jig 20 descends while in contact with the inclined surface 13, a gradually stronger pressure may be applied between the inclined surface 13 and the first upper jig 20. Such an action may correspond to the amount of elastic deformation and elastic displacement of an elastic member 46 (which will be described below) and may be proportional to the elastic modulus of the elastic member 46.

At a time point at which the first upper jig 20 has passed the inclined surface 13 and starts to come into contact with the first extending surface 141, a pressure which is the same as or greater than the pressure acting on the lower end of the inclined surface 13 may be concentrated and applied to the first extending surface 141. Then, as the first upper jig 20 further descends and a contact area between the vertical extending surface 14 and the first upper jig 20 gradually increases, a horizontal pressing force applied by the first upper jig 20 may be reduced and uniformly applied to the entire vertical extending surface 14 at the same time.

The first extending surface 141 is a portion where the first upper jig 20 has passed the inclined surface 13 and starts to come into contact with the vertical extending surface 14. The first extending surface 141 is a portion where the strongest horizontal pressing force is applied in a concentrated manner. The beading insertion part 17 of the lower jig 10 and the first extending surface 141 of the vertical extending surface 14 may be located on the same horizontal line H.

As the beading insertion part 17 and the first extending surface 141 are located on the same horizontal line H, it is possible to further reduce the force applied to the vertical extending surface 14 by the first upper jig 20 from acting as the moment (rotational force) on the contact portion P. As the beading insertion part 17 and the first extending surface 141 are located on the same horizontal line H, horizontal pressure may be more definitely applied to the contact portion P between the beading insertion part 17 and the beading part 5.

In a state in which the first upper jig 20 is in contact with both the first extending surface 141 and the second extending surface 142, a pressing force is horizontally applied to all an upper side, a lower side, and the horizontal line H of the beading insertion part 17 of the lower jig 10. Accordingly, the force applied to the vertical extending surface 14 by the first upper jig 20 does not act as a moment on the contact portion P. In the state in which the first upper jig 20 is in contact with both the first extending surface 141 and the second extending surface 142, a can support part 16 (which will be described below) and the beading insertion part 17 of the lower jig 10 may maintain a state of being in stable close contact throughout the upper portion of the battery can 4.

The can fixing part 15 is a portion of the lower jig 10 that is in contact with the battery can 4. The lower jig body 11 may have the first inner diameter R1 allowing the second upper jig 30 to be inserted thereinto. The can fixing part 15 may be formed on an inner circumferential portion of the lower jig body 11 to protrude toward the center of the battery can 4. The can fixing part 15 may have an inner diameter which is smaller than the first inner diameter R1.

Referring to FIGS. 5 to 7, the can fixing part 15 according to at least one embodiment of the present disclosure may include the can support part 16 and the beading insertion part 17.

The can support part 16 may be a portion in contact with an upper circumference of the battery can 4 above and below the beading part 5. The upper portion of the battery can 4 may have a constant diameter, and the can support part 16 may have a set inner diameter to be in close contact with the upper portion of the battery can 4. The can support part 16 may have an inner diameter which is smaller than the first inner diameter R1.

Referring to FIGS. 7 and 8, the can support part 16 according to at least one embodiment of the present disclosure may include a first can support part 161 and a second can support part 162.

The first can support part 161 may be in contact with the circumference of the battery can 4 below the beading insertion part 17. The second can support part 162 may be in contact with the circumference of the battery can 4 above the beading insertion part 17.

The lower jig body 11 may have the first inner diameter R1 allowing the second upper jig 30 to be inserted thereinto. The first can support part 161 may have a second inner diameter R2 which is smaller than the first inner diameter R1. The second inner diameter R2 may be smaller than an outer diameter of the battery can 4 in an uncrimped state. Accordingly, the first can support part 161 may be in close contact with the circumference of the battery can 4. The second can support part 162 may have a third inner diameter R3 which is smaller than the first inner diameter R1.

The can support part 16 may be located to be radially stacked on the lower jig body 11. The lower jig body 11 may have a first thickness T1 in the horizontal direction. The first can support part 161 and the lower jig body 11 together may have a second thickness T2 greater than the first thickness T1 in the horizontal direction. The second can support part 162 and the lower jig body 11 together may have a third thickness T3 greater than the first thickness T1 in the horizontal direction. Accordingly, the lower jig 10 may implement strong rigidity against a force acting on the center of the battery can 4.

As the second upper jig 30 moves downward and is seated on an upper surface of the second can support part 162, the upper end portion of the battery can 4 may be bent downwardly toward the cap assembly 6. The upper end portion of the battery can 4 may be bent downwardly by being pressed by the second upper jig 30 while being surrounded by the second can support part 162. The upper end portion of the battery can 4 may be bent downwardly in a state in which radial deformation exceeding the third inner diameter R3 is restricted by the second can support part 162.

The third inner diameter R3 may be greater than the second inner diameter R2. Accordingly, when the first can support part 161 comes into contact with the circumference of the battery can 4, a gap may be generated between the second can support part 162 and the upper end portion of the battery can 4. When a gap is formed between the second can support part 162 and the battery can 4, the second can support part 162 may be prevented from being directly pressed and coming into close contact with the upper end portion of the battery can 4 in the process of bending the upper end portion of the battery can 4.

Accordingly, in the process of bending the upper end portion of the battery can 4, it is possible to reduce damage to a surface of the battery can 4 caused by it being rubbed against the second can support part 162 and the second upper jig 30. In addition, the upper end portion of the battery can 4 with elasticity may be bent downwardly toward the cap assembly 6 to form a more naturally bent shape. Accordingly, when the gap is formed between the second can support part 162 and the battery can 4, the product appearance quality of the battery cell 2 can be further improved.

The beading insertion part 17 is a portion of the lower jig 10 that is inserted into the beading part 5 of the battery can 4. The beading insertion part 17 may be disposed on an inner circumferential portion of the can support part 16 to further protrude toward the center of the battery can 4. The beading insertion part 17 may be located between the first can support part 161 and the second can support part 162. The upper end portion of the battery can 4 located above the beading part 5 may be pressed downwardly by the second upper jig 30 while being supported from below by the beading insertion part 17 inserted into the beading part 5 and bent toward the cap assembly 6 disposed above the beading part 5.

The beading insertion part 17 and the vertical extending surface 14 may be located on the same horizontal line H. Particularly, the beading insertion part 17 and an upper portion of the vertical extending surface 14 may be located on the same horizontal line H. The beading insertion part 17 and the second extending surface 142 may be located on the same horizontal line H.

When the beading insertion part 17 and the vertical extending surface 14 are located on the same horizontal line H, a force with which the first upper jig 20 horizontally presses the vertical extending surface 14 may be horizontally applied to the contact portion P between the beading part 5 and the beading insertion part 17. Accordingly, it is possible to prevent the force of the first upper jig 20 horizontally applied to the vertical extending surface 14 from acting as a moment on the contact portion P. Accordingly, it is possible to reduce damage to the beading insertion part 17 having a width and a thickness which are smaller than those of other portions of the lower jig 10. Accordingly, processing of the upper end portion of the battery can 4, which is supported from below by the beading insertion part 17, may be reliably done to achieve a certain form.

The beading insertion part 17 may be located at a height less than or equal to 15.0% of a total height of the can fixing part 15 from the top of the can fixing part 15. More preferably, the beading insertion part 17 may be located at a height equivalent to 8.1 to 9.6% of the total height of the can fixing part 15 from the top of the can fixing part 15.

For example, the can fixing part 15 may be formed to have a height (vertical thickness) of 19.65 mm. In this case, the beading insertion part 17 may be formed at a height of 14.05 to 18.5 mm from the bottom of the can fixing part 15. More preferably, the beading insertion part 17 may be formed at a height of 17.75 to 17.95 mm from the bottom of the can fixing part 15. The beading insertion part 17 may be formed 1.6 to 1.9 mm below the top of the can fixing part 15.

The first can support part 161 and the second can support part 162 may have inner diameters R2 and R3 that satisfy R2≤R3. For example, the first can support part 161 may have an inner diameter R2 that satisfies 422.90 mm≤R2≤423.00 mm. The second can support part 162 may have an inner diameter R3 that satisfies 422.90 mm≤R3≤423.10 mm. More preferably, the second inner diameter R2 of the first can support part 161 may range from 422.93 to 422.96 mm, and the third inner diameter R3 of the second can support part 162 may range from 422.96 to 423.03 mm. For example, the second inner diameter R2 may be 422.96 mm, and the third inner diameter R3 may be 423.03 mm. When the second inner diameter R2 and the third inner diameter R3 are the same, R2=R3=423.03 mm, or R2=R3=422.96 mm.

The beading insertion part 17 may be formed between the first can support part 161 and the second can support part 162 to further protrude toward the center of the battery can 4. An end portion of the beading insertion part 17 inserted into the beading part 5 may have the smallest inner diameter in the lower jig 10. A boundary portion between the first can support part 161 and the beading insertion part 17 and a boundary portion between the second can support part 162 and the beading insertion part 17 may have rounded curved shapes.

Referring to FIGS. 7 and 8, the beading insertion part 17 according to at least one embodiment of the present disclosure may have a semicircular shape or semielliptical cross-sectional shape. The beading insertion part 17 may have a vertically symmetrical shape and flat upper and lower surfaces.

For example, the boundary portion between the first can support part 161 and the beading insertion part 17 may have a rounded curved shape having a radius of 1.3 to 1.6 mm. The boundary portion between the second can support part 162 and the beading insertion part 17 may have a rounded curved shape having a radius of 0.5 to 0.9 mm. The end portion of the beading insertion part 17 may have a rounded curved shape having a radius of 0.5 to 0.7 mm. The first can support part 161 may be formed to vertically extend parallel to a vertical line V.

FIG. 9 is a schematic cross-sectional view illustrating a main portion of a lower jig according to at least another embodiment of the present disclosure.

Referring to FIG. 9, a beading insertion part 17 according to at least another embodiment of the present disclosure may have a triangular cross-sectional shape. The beading insertion part 17 may have a cross-sectional shape in which at least one of an upper surface and a lower surface is formed to be inclined.

For example, a boundary portion between the beading insertion part 17, a first can support part 161, and a second can support part 162 according to at least another embodiment of the present disclosure may have the same size and shape as the beading insertion part 17 according to at least one embodiment of the present disclosure. The lower surface of the beading insertion part 17 may have an inclination angle of 30 to 40° based on a horizontal line H. The first can support part 161 may be formed to be inclined 100 to 120° based on a horizontally extending lower surface. An end portion of the beading insertion part 17 may have a rounded curved shape having a radius of 0.4 to 0.5 mm.

Referring to FIGS. 5 and 6, the lower jig 10 according to at least one embodiment of the present disclosure may further include an extending portion 18 in addition to the lower jig body 11, the upper jig contact surface 12, and the can fixing part 15.

All the lower jig body 11, the upper jig contact surface 12, and the can fixing part 15 may have a shape corresponding to a portion of a cylinder in the circumferential direction. The extending portion 18 may have a quadrangular block shape having a constant width and may be integrally formed with a lower side of the lower jig body 11. The extending portion 18 may be formed to radially extend from the lower side of the upper jig contact surface 12 or radially extend below the upper jig contact surface 12. As the beading insertion part 17 and the upper jig contact surface 12 are located on the same horizontal line H, the extending portion 18 may be located below the beading insertion part 17.

The extending portion 18 may be formed on each of the plurality of split jigs 10A, 10B, and 10C, and each of the plurality of extending portions 18 may extend radially with the battery can 4 as a center. While the extending portions 18 are guided by a guide unit 40, the split jigs 10A, 10B, and 10C may move in a direction toward the center of the battery can 4 or return in the opposite radial direction. In this case, the split jigs 10A, 10B, and 10C may have the same width and move to be closer to or spaced apart from each other.

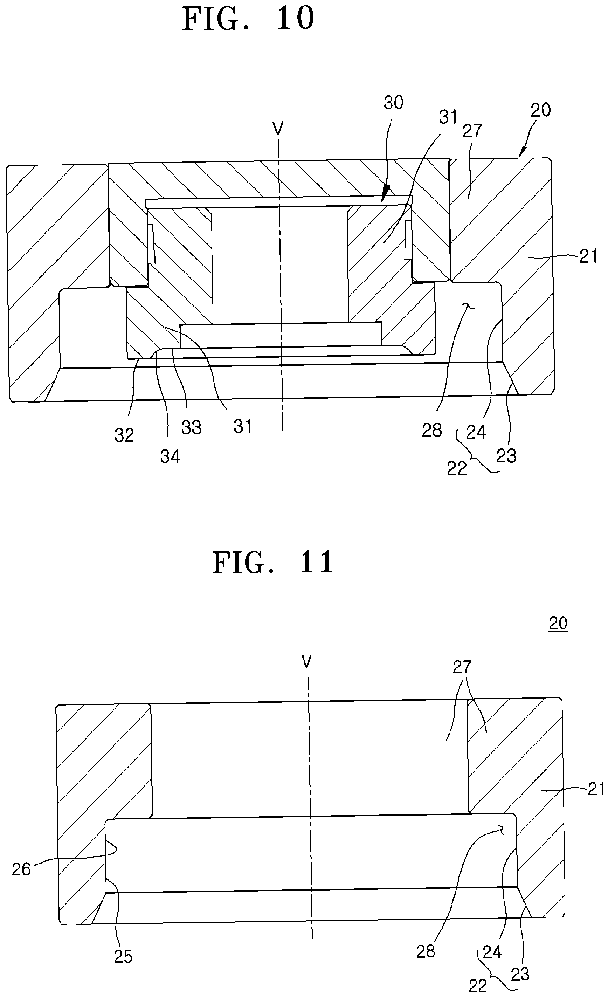

FIG. 10 is a schematic cross-sectional view illustrating main portions of the first upper jig and the second upper jig according to at least one embodiment of the present disclosure, and FIG. 11 is a schematic cross-sectional view illustrating a main portion of the first upper jig according to at least one embodiment of the present disclosure.

Referring to FIGS. 10 and 11, the first upper jig 20 according to at least one embodiment of the present disclosure may include a first upper jig body 21, a jig pressing surface 22, an upper jig coupling part 27, and an insertion space 28.

The first upper jig body 21 may have a cylindrical shape and may be installed to be movable toward the lower jig 10. The first upper jig body 21 may be located above the lower jig body 11 and may have a diameter that allows the first upper jig body 21 to come into contact with the upper jig contact surface 12 of the lower jig 10 when lowered.

The jig pressing surface 22 of the first upper jig 20 is a portion which is in contact with the lower jig 10 and presses the lower jig 10 toward the battery can 4. The jig pressing surface 22 may be formed on an inner circumferential portion of the first upper jig body 21.

Referring to FIGS. 10 and 11, the jig pressing surface 22 according to at least one embodiment of the present disclosure may include the inclined pressing surface 23 and the horizontal pressing surface 24.

The inclined pressing surface 23 may be formed at a lower portion of the inner circumferential portion of the first upper jig body 21 and inclined at the first inclination angle θ. The horizontal pressing surface 24 may be formed above the inclined pressing surface 23 to vertically extend. When the first upper jig body 21 descends, the inclined pressing surface 23 and the horizontal pressing surface 24 may sequentially come into contact with the inclined surface 13 and the vertical extending surface 14 of the lower jig 10.

The inclined pressing surface 23 may come into contact with the inclined surface 13 of the lower jig 10, press the lower jig 10, and move the lower jig 10 toward the battery can 4 while moving downwardly in a state of being in contact with the inclined surface 13. The inclined pressing surface 23 may be continuously formed along a circumference of a lower end portion of the inner circumferential portion of the first upper jig body 21.

The inclined pressing surface 23 and the inclined surface 13 may have the first inclination angle θ and may be in surface contact with each other in a direction perpendicular to the first inclination angle θ. The inclined pressing surface 23 may have a smaller vertical width than the inclined surface 13. The inclined pressing surface 23 may sequentially come into contact with first inclined surface 131 and the second inclined surface 132 while maintaining a constant contact area with the inclined surface 13.

When the inclined pressing surface 23 descends while in contact with the inclined surface 13 in the direction perpendicular to the first inclination angle θ, the inclined surface 13 may be pushed and moved toward the center of the battery can 4 by the inclined pressing surface 23. As the inclined surface 13 moves toward the center of the battery can 4, an outer diameter of the lower jig body 11 may decrease gradually, and the inclined pressing surface 23 may further descend. When the inclined surface 13 is moved the first horizontal distance DR1, the inclined pressing surface 23 may be moved downwardly the first vertical distance DL1.

The horizontal pressing surface 24 may horizontally come into contact with the vertical extending surface 14 of the lower jig 10. The horizontal pressing surface 24 may be continuously formed along a circumference of the inner circumferential portion of the first upper jig body 21. The horizontal pressing surface 24 may include the first portion 25 located at the lower end portion and the second portion 26 located above the first portion 25. The first portion 25 may sequentially come into contact with the first extending surface 141 and the second extending surface 142 of the vertical extending surface 14. While the first portion 25 is in contact with second extending surface 142, the second portion 26 may come into contact with the first extending surface 141.

The upper jig coupling part 27 may be a portion where the second upper jig 30 is fixed and may be formed at an upper portion of the first upper jig body 21. The second upper jig 30 may be disposed in the first upper jig body 21, and an upper portion of the second upper jig 30 may be coupled to the upper jig coupling part 27 by a fastening member (not shown) such as a bolt. In a state in which the second upper jig 30 is coupled to the upper jig coupling part 27, a lower portion of the second upper jig 30 may radially face the jig pressing surface 22 with a space interposed therebetween.

The insertion space 28 is a portion into which the lower jig 10 is inserted when the first upper jig body 21 descends. The insertion space 28 may be formed between the jig pressing surface 22 and the second upper jig 30 to be downwardly open. The lower jig body 11 may be pushed, gradually moved toward the center of the battery can 4, and inserted into the insertion space 28 by the inclined pressing surface 23. When the lower jig body 11 is inserted into the insertion space 28, the vertical extending surface 14 may come into contact with the horizontal pressing surface 24, which is descending, over a gradually increasing area.

As the insertion space 28 is formed, the lower jig body 11 may perform the above-described function without interfering with the second upper jig 30. In a state in which the lower jig body 11 is inserted into the insertion space 28, the second upper jig 30 may come into contact with an upper surface of the can support part 16 located at a lower height than the lower jig body 11 without interfering with the lowerjig body 11.

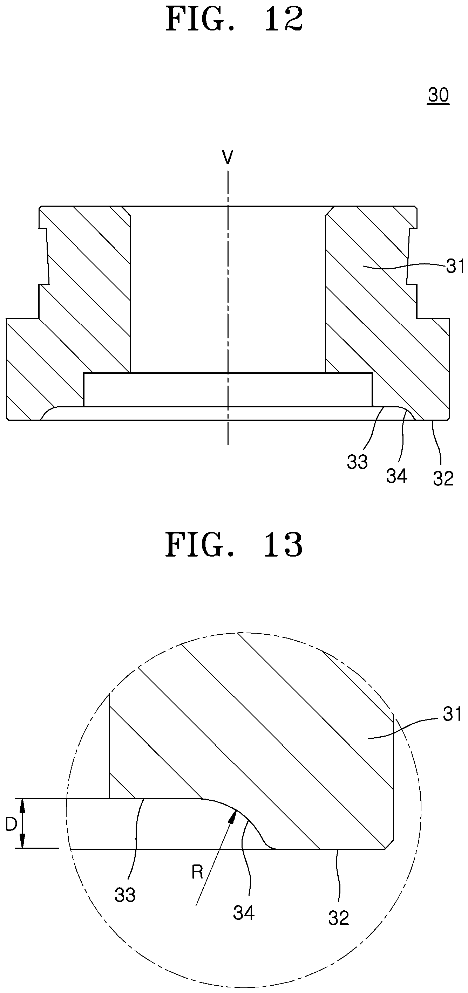

FIG. 12 is a schematic cross-sectional view illustrating a main portion of the second upper jig according to at least one embodiment of the present disclosure, and FIG. 13 is an enlarged view illustrating the main portion of FIG. 12.

Referring to FIGS. 12 and 13, the second upper jig 30 according to at least one embodiment of the present disclosure may include a second upper jig body 31, a seating surface 32, a downward pressing surface 33, and a rounded surface 34.

The second upper jig body 31 may have a cylindrical shape and may be fixed to the inside of the first upper jig 20. The lower jig body 11 may have the first inner diameter R1, and the second upper jig body 31 may have a diameter which is smaller than the first inner diameter R1 and may be disposed in the lower jig body 11. The second upper jig body 31 and the first upper jig body 21 may be disposed on the same vertical line V.

The seating surface 32 may be a portion in contact with an upper surface of the can fixing part 15 and may be formed on a circumference of an outer circumferential portion of the bottom of the second upper jig body 31. The seating surface 32 and the can fixing part 15 may have the same inner diameter. The seating surface 32 and the second can support part 162 may have the same third inner diameter R3.

The downward pressing surface 33 may be formed inside the seating surface 32 to be concave upwardly to a set depth D. The downward pressing surface 33 may have a flat shape. The downward pressing surface 33 may press the upper end portion of the battery can 4 located above the beading part 5 downwardly to bring the upper end portion of the battery can 4 into close contact with the cap assembly 6. The upper end portion of the battery can 4 may be pressed by the downward pressing surface 33 to have a flat upper surface. The downward pressing surface 33 may be formed such that 0.2≤D≤4.0 mm is satisfied.

The rounded surface 34 may be formed between the seating surface 32 and the downward pressing surface 33 to be rounded with a set curvature R. The rounded surface 34 may be formed such that 0.5 mm≤R≤4.5 mm is satisfied. The rounded surface 34 may have a set curvature R.

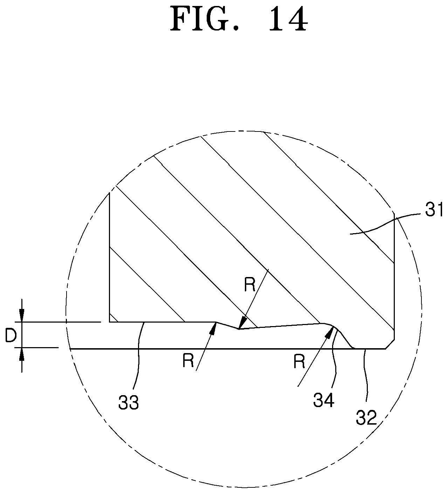

FIG. 14 is a schematic cross-sectional view illustrating a main portion of a second upper jig according to at least another embodiment of the present disclosure.

Referring to FIG. 14, when a downward pressing surface 33 has a multistage structure, a plurality of rounded surfaces 34 having different curvatures R may be formed according to radial locations. The plurality of rounded surfaces 34 having a plurality of different curvatures R may be formed between a seating surface 32 and the downward pressing surface 33. In this case, the plurality of rounded surfaces 34 may be formed such that 0.1 mm≤R≤17.0 mm is satisfied.

As the rounded surfaces 34 is continuously formed inside the seating surface 32, when a second upper jig 30 descends, an upper end portion of a battery can 4 may come into contact with the rounded surface 34 and may be naturally bent or tilted toward the downward pressing surface 33. As the rounded surfaces 34 are formed, it is possible to prevent the upper end portion of the battery can 4 from being deformed into a random shape and crushed. In addition, it is possible to prevent the second upper jig 30 from being worn due to excessively coming into contact with the upper end portion of the battery can 4.

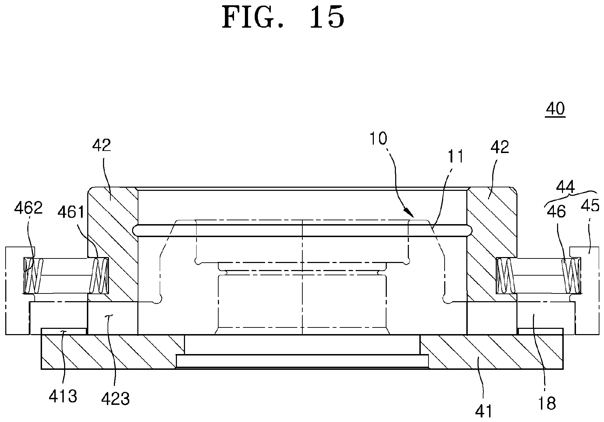

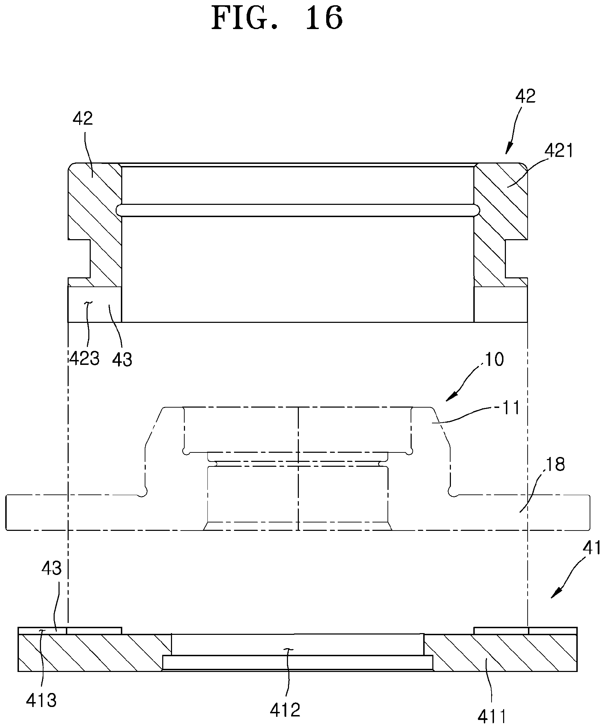

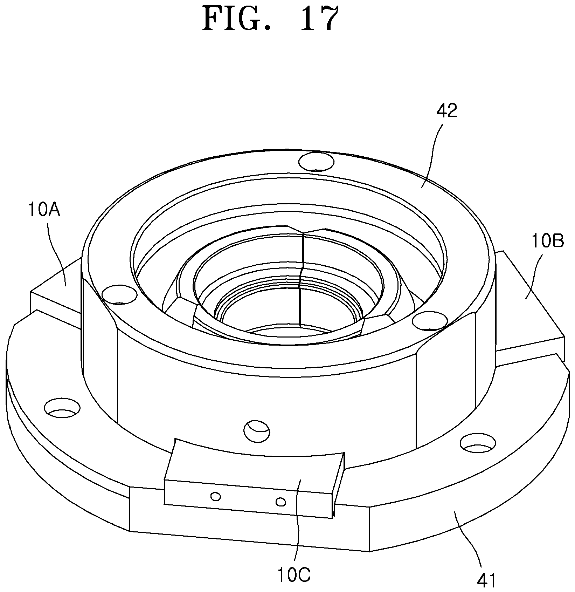

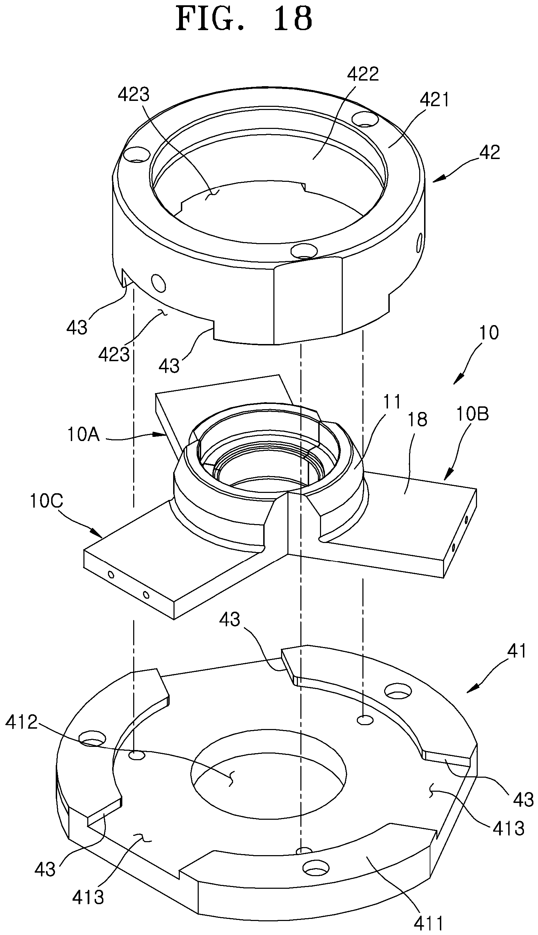

FIG. 15 is a schematic cross-sectional view illustrating a main portion of the guide unit according to at least one embodiment of the present disclosure, and FIG. 16 is an exploded schematic perspective view illustrating a main portion of the guide unit according to at least one embodiment of the present disclosure. FIG. 17 is a schematic perspective view illustrating main parts such as the lower jig, a first housing, and a second housing according to at least one embodiment of the present disclosure, and FIG. 18 is an exploded schematic perspective view illustrating the main parts such as the lower jig, the first housing, and the second housing according to one embodiment of the present disclosure;

Referring to FIGS. 15 to 18, the crimping apparatus 1 for the battery cell 2 according to at least one embodiment of the present disclosure may further include the guide unit 40 which guides the radial movement of the extending portion 18 of the lower jig 10 in addition to the lower jig 10, the first upper jig 20, and the second upper jig 30. The lower jig 10 may be guided in the direction toward the battery can 4 and in the opposite direction by the guide unit 40.

Referring to FIGS. 15 to 18, the guide unit 40 according to at least one embodiment of the present disclosure may include a first housing 41, a second housing 42, and a jig return device 44.

The first housing 41 may support the lower jig 10 from below. The first housing 41 may have an overall disk shape. The lower jig 10 may be seated on the first housing 41.

The second housing 42 may be disposed on the first housing 41 with the extending portion 18 of the lower jig 10 interposed therebetween. A guide surface 43 which guides the movement of the extending portion 18 may be formed between the first housing 41 and the second housing 42. The first housing 41 and the second housing 42 may be coupled to each other by a fastening member (not shown) such as a bolt.

The guide surface 43 may be in contact with a side surface of the extending portion 18 and may guide the movement of the extending portion 18 in a set direction. The guide surface 43 may be formed to radially extend to guide the radial movement of the lower jig 10.

The guide surface 43 may be formed by forming an upper portion of the first housing 41 to protrude upwardly or forming a lower portion of the second housing 42 to protrude downwardly. The guide surface 43 may be formed by forming the upper portion of the first housing 41 to protrude upwardly and the lower portion of the second housing 42 to protrude downwardly.

The guide surface 43 may be formed by forming the upper portion of the first housing 41 to be recessed downward, or forming the lower portion of the second housing 42 to be recessed upwardly. The guide surface 43 may be formed by forming the upper portion of the first housing 41 to be recessed downward and the lower portion of the second housing 42 to be recessed upwardly.

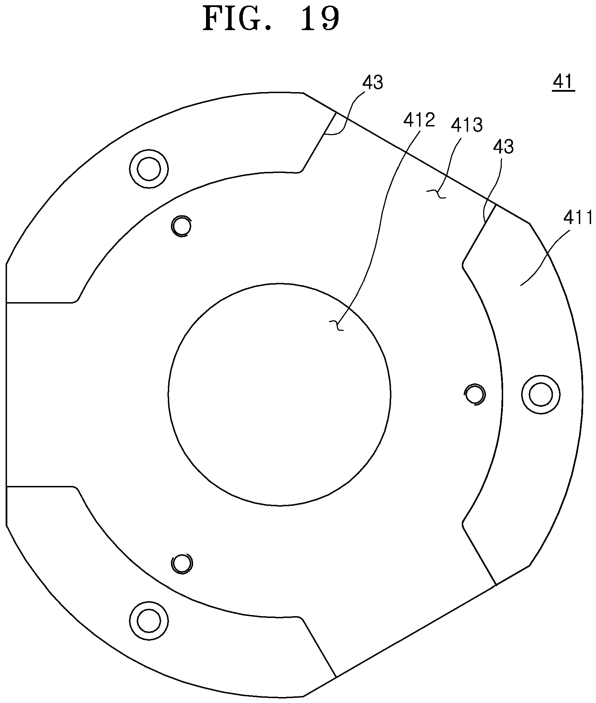

FIG. 19 is a schematic plan view illustrating the first housing according to at least one embodiment of the present disclosure;

Referring to FIGS. 18 and 19, the first housing 41 according to at least one embodiment of the present disclosure may include a first housing body 411 and a first guide groove 413.

The first housing body 411 may have the shape of a disc with a hole 412 which is formed in the center and through which the battery can 4 may pass.

The first guide groove 413 may be a portion which guides the radial movement of the extending portion 18 and may be formed to be recessed from an upper portion of the first housing body 411. The first guide groove 413 may be formed to radially extend in the upper portion of the first housing body 411 and radially formed around the vertical line V. The extending portion 18 may be disposed to pass through the first housing body 411 through the first guide groove 413.

The first guide groove 413 may have a vertical width corresponding to a part or all of a vertical thickness of the extending portion 18 and a transversal width corresponding to a transversal width of the extending portion 18. A side surface of the first guide groove 413 may serve as the guide surface 43 which guides the radial movement of the extending portion 18. The extending portion 18 may be in contact with the side surface of the first guide groove 413 so that the radial movement of the extending portion 18 may be guided. When the extending portion 18 is seated in the first guide groove 413, the side surface of the extending portion 18 may be in contact with the side surface of the first guide groove 413 so that the lateral movement of the extending portion 18 may be restricted.

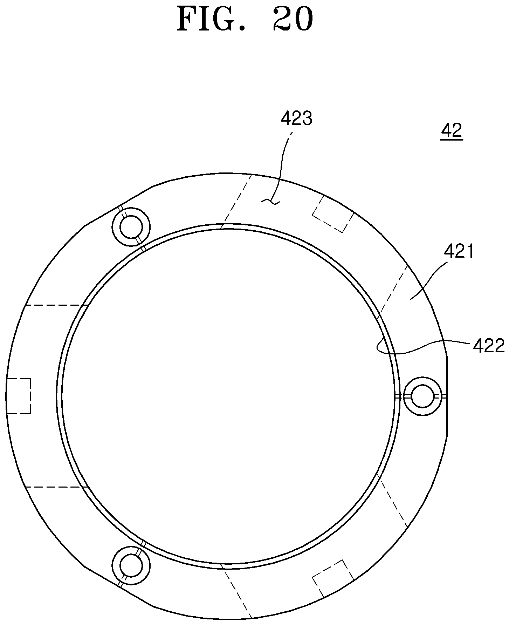

FIG. 20 is a schematic plan view illustrating the second housing according to at least one embodiment of the present disclosure.

Referring to FIGS. 18 and 20, the second housing 42 according to at least one embodiment of the present disclosure may include a second housing body 421, a descent guide surface 422, and a second guide groove 423.

The second housing body 421 may have a cylindrical shape allowing the first upper jig 20 to be inserted into the second housing body 421. At least a portion of the first upper jig 20 may be inserted into the second housing body 421. The first upper jig 20 may have an initial position where the lower portion of the first upper jig 20 is in contact with an inner surface of the second housing body 421.

The descent guide surface 422 may be a portion which guides the descent of the first upper jig 20 and may be formed on an inner circumferential portion of the second housing body 421 to extend vertically. The first upper jig 20 may directly descend toward the lower jig 10 while being in contact with the descent guide surface 422.

The second guide groove 423 may be a portion which guides the radial movement of the extending portion 18 and may be formed to extend radially in a lower portion of the second housing body 421. The second guide groove 423 may be formed to radially pass through the second housing body 421 and radially formed around the vertical line V. The extending portion 18 may be disposed to pass through the second housing body 421 through the second guide groove 423.

The second guide groove 423 may have a vertical width corresponding to the vertical thickness of the extending portion 18 and a transversal width corresponding to the transversal width of the extending portion 18. The side surface of the extending portion 18 may serve as the guide surface 43 which guides the radial movement of the extending portion 18. The extending portion 18 may be in contact with a side surface of the second guide groove 423 so that radial movement of the extending portion 18 may be guided. The extending portion 18 may be in contact with an upper surface of the second guide groove 423 while being seated in the first housing 41 so that the vertical movement of the extending portion 18 may be restricted.

The jig return device 44 is a device which returns the lower jig 10 that has moved toward the battery can 4 to its initial position. The jig return device 44 may continuously apply an elastic force in the radial direction to the lower jig 10. Accordingly, when the first upper jig 20 moves upwardly and is spaced apart from the lower jig 10, the lower jig 10 may be automatically returned by the jig return device 44.

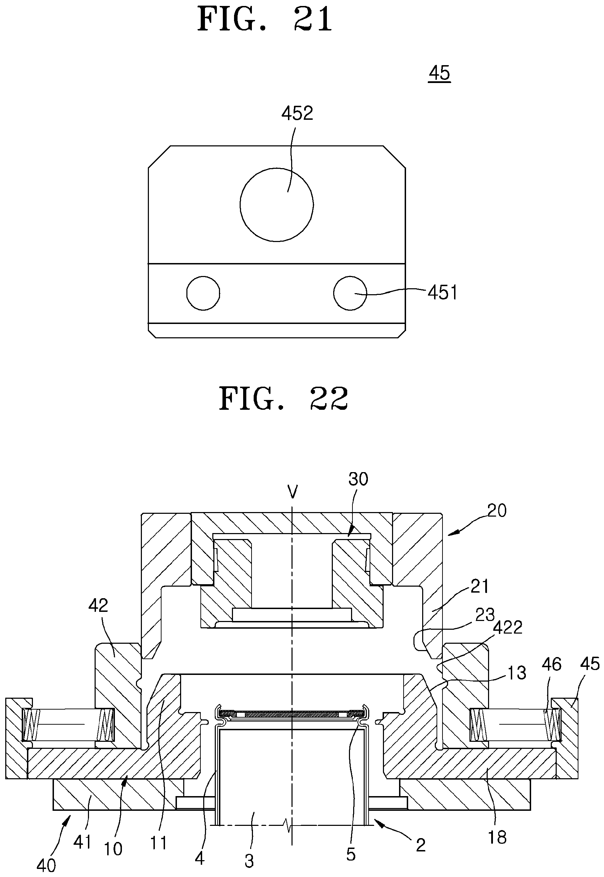

FIG. 21 is a schematic side view illustrating a spring block according to at least one embodiment of the present disclosure.

Referring to FIGS. 15 and 21, the jig return device 44 according to at least one embodiment of the present disclosure may include a spring block 45 and the elastic member 46.

The spring block 45 may be coupled to the lower jig 10 on the radial outer side of the second housing 42. The spring block 45 may move with the lower jig 10 while being coupled to the extending portion 18. The spring block 45 may have the shape of an upright plate.

The spring block 45 may be fixed to a radial end of the extending portion 18 by a fastening member (not shown) such as a bolt. A jig coupling hole 451 may be formed to pass through a lower portion of the spring block 45. The fastening member (not shown) may pass through the jig coupling hole 451 and may be fixed to the extending portion 18. An upper portion of the spring block 45 may be disposed to radially face the second housing 42. A spring coupling hole 452 into which a second end portion 462 (which will be described below) of the elastic member 46 is inserted and coupled may be formed in the upper portion of the spring block 45.

The elastic member 46 may have a compression spring structure and may be disposed between the second housing 42 and the spring block 45 to extend horizontally. A first end portion 461 of the elastic member 46 may be coupled to the second housing 42, and the second end portion 462 may be coupled to the upper portion of the spring block 45.

The second housing 42 may be connected to the first housing 41 to maintain a constant position, and the first end portion 461 may also maintain a constant position. When the lower jig 10 moves toward the battery can 4, the spring block 45 may move with the lower jig 10, and the second end portion 462 may also move therewith. When the lower jig 10 moves toward the battery can 4, the elastic member 46 may be elastically compressed in conjunction with the movement of the spring block 45.

When the lower jig 10 moves toward the battery can 4, a pressing force may be continuously radially applied to the lower jig 10 by the elastic member 46. When the lower jig 10 moves toward the battery can 4, as the movement displacement of the lower jig 10 increases, the amount of compressive displacement and elastic force of the elastic member 46 may increase. When the force pressing the lower jig 10 toward the battery can 4 is released, for example, when the first upper jig 20 is spaced apart from the lower jig 10, the lower jig 10 may quickly return to its initial position by an elastic restoring force of the elastic member 46.

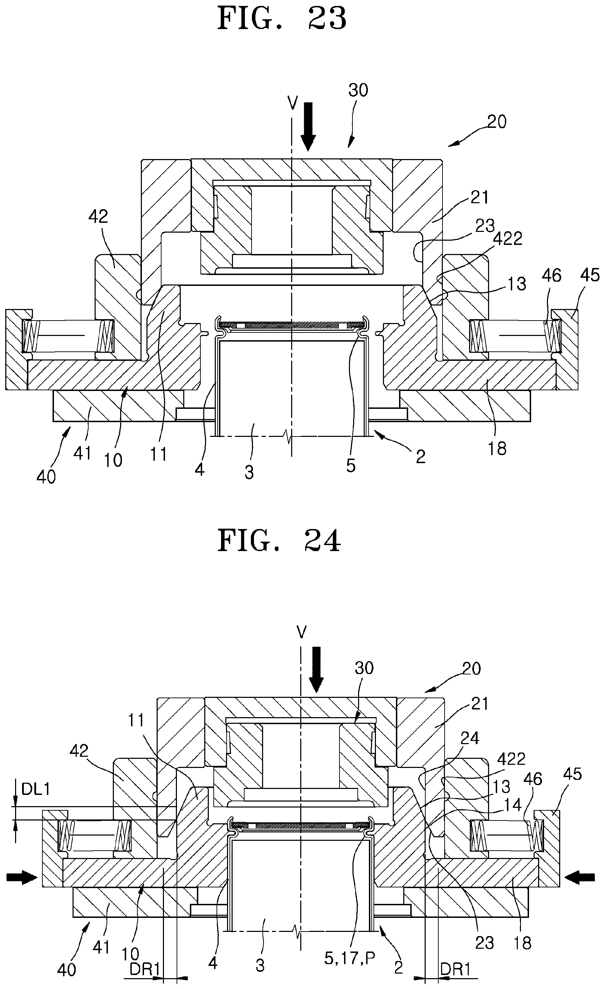

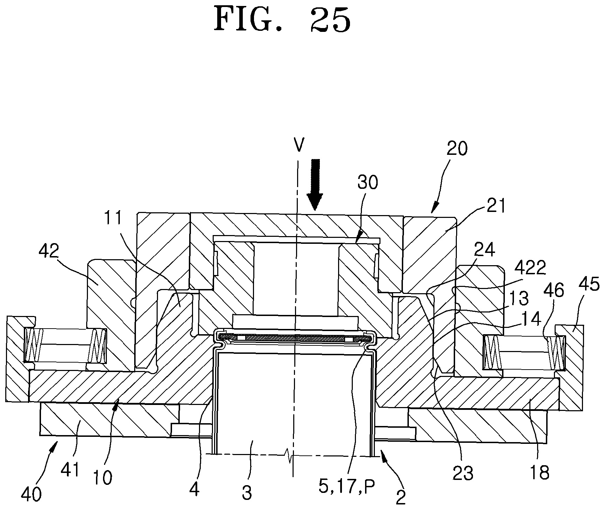

FIG. 22 is a schematic cross-sectional view illustrating a main portion in an initial state of the crimping apparatus for a battery cell according to at least one embodiment of the present disclosure, and FIG. 23 is a schematic cross-sectional view illustrating a main portion in a state in which the first upper jig descends and comes into contact with an inclined surface of the lower jig according to at least one embodiment of the present disclosure. FIG. 24 is a schematic cross-sectional view illustrating a main portion in a state in which the first upper jig further descends, reaches a lower end of the inclined surface of the lower jig, and starts to come into contact with the vertical extending surface according to at least one embodiment of the present disclosure, and FIG. 25 is a schematic cross-sectional view illustrating a main portion in a state in which the first upper jig further descends and comes into contact with the vertical extending surface according to at least one embodiment of the present disclosure.

A crimping process may be performed by arranging the battery cell 2, which is a semi-finished product, between the split jigs 10A, 10B, and 10C disposed to be spaced apart from each other as illustrated in FIG. 22, lowering both the first upper jig 20 and the second upper jig 30 as illustrated in FIG. 23, supporting the circumference of the battery can 4 using the lower jig 10 as illustrated in FIG. 24, and pressing and sealing the battery can 4 using the second upper jig 30 as illustrated in FIG. 25. In addition, while raising the first upper jig 20, the split jigs 10A, 10B, and 10C may be returned to their initial positions using the jig return device 44.

A process of transferring the battery cell 2 to another location from between the split jigs 10A, 10B, and 10C and arranging a battery cell 2, which is a new semi-finished product, between the split jigs 10A, 10B, and 10C may be repeatedly performed. That is, a plurality of battery cells 2 may be crimped by repeatedly performing a process of setting a battery cell 2, which is a semi-finished product, between the split jigs 10A, 10B, and 10C, lowering and raising the first upper jig 20 and the second upper jig 30, and transferring the battery cell 2 to another location.

According to at least an embodiment of the present disclosure, a crimping process can be reliably performed by performing a simple process of arranging a battery cell, which is a semi-finished product, inside a lower jig, lowering both a first upper jig and a second upper jig, supporting a circumference of a battery can using the lower jig, and pressing and sealing an end portion of the battery can toward a cap assembly using the second upper jig.

In addition, according to at least one embodiment of the present disclosure, a location at which a force of the first upper jig horizontally pressing a vertical extending surface is applied and a contact portion between a beading part and a beading insertion part can be located on the same horizontal line by positioning the vertical extending surface of the lower jig and the beading insertion part on the same horizontal line.

Accordingly, since the beading insertion part can uniformly come into contact with the entire beading part, damage, such as scratches or dents, to the beading part occurring because the beading insertion part non-uniformly comes into contact with a portion of the beading part can be prevented. In addition, it is possible to prevent the beading insertion part from damaging the beading part or surrounding parts while the beading insertion part is inserted into or withdrawn from the beading part. In addition, it is possible to prevent a thickness and an outer diameter of an entire circumference of the battery cell from being differently formed. Accordingly, the formation quality of the exterior of the battery cell can be improved.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A crimping apparatus for a battery cell (2), comprising:
a lower jig (10) disposed around a circumference of a battery can (4);
a first upper jig (20) which descends into contact with the lower jig (10) above the battery can (4) and presses and moves the lower jig (10) toward the battery can (4); and
a second upper jig (30), which is disposed inside the first upper jig (20), descends along with the first upper jig (20), and presses an end portion of the battery can (4) downwardly to bend the end portion toward a cap assembly (6) of the battery cell (2).

2. The crimping apparatus for the battery cell (2) as claimed in claim 1, wherein the lower jig (10) comprises split jigs (10A, 10B, 10C) which are split into a plurality of pieces along the circumference of the battery can (4) and move toward the battery can (4) in conjunction with the descent of the first upper jig (20),
wherein the split jig (10A, 10B, 10C) comprises:
a lower jig body (11) having a first inner diameter allowing the second upper jig (30) to be inserted into the lower jig body (11) and disposed around the circumference of the battery can (4);
an upper jig contact surface (12) which is formed on an outer circumferential portion of the lower jig body (11) and comes into contact with the first upper jig (20) while the first upper jig (20) descends;
a can fixing part (15) which is formed to protrude from an inner circumferential portion of the lower jig body (11) and comes into contact with the battery can (4) when the first upper jig (20) descends; and
an extending portion (18) which is formed to extend radially below the upper jig contact surface (12) and comes into contact with a guide unit (40) to guide radial movement of the lower jig (10).

3. The crimping apparatus for the battery cell (2) as claimed in claim 2, wherein the upper jig contact surface (12) comprises:
an inclined surface (13) which is formed on the outer circumferential portion of the lower jig body (11) to be inclined outwardly and comes into contact with the first upper jig (20) while the first upper jig (20) descends; and
a vertical extending surface (14) which is formed below the inclined surface (13) to extend vertically and comes into contact with the first upper jig (20) while the first upper jig (20) descends.

4. The crimping apparatus for the battery cell (2) as claimed in claim 3, wherein the inclined surface (13) is formed at a first inclination angle such that the lower jig (10) moves a first horizontal distance toward the battery can (4) when the first upper jig (20) descends a first vertical distance while in contact with the inclined surface (13).

5. The crimping apparatus for the battery cell (2) as claimed in claims 2 to 4, wherein the can fixing part (15) comprises:
a can support part (16) which has a smaller inner diameter than the first inner diameter and is in contact with the circumference of the battery can (4); and
a beading insertion part (17) formed to protrude from an inner circumferential portion of the can support part (16) to be inserted into a beading part (5) of the battery can (4).

6. The crimping apparatus for the battery cell (2) as claimed in claim 5, wherein the can support part (16) comprises:
a first can support part (161) which has a second inner diameter that is smaller than the first inner diameter and is in contact with the circumference of the battery can (4) below the beading insertion part (17); and
a second can support part (162) which is in contact with the circumference of the battery can (4) above the beading insertion part (17) and has a third inner diameter that is smaller than the first inner diameter.

7. The crimping apparatus for the battery cell (2) as claimed in claim 6, wherein:
the lower jig body (11) has a first thickness in a horizontal direction;
the first can support part (161) and the lower jig body (11) together have a second thickness that is greater than the first thickness in the horizontal direction; and
the second can support part (162) and the lower jig body (11) together have a third thickness that is greater than the first thickness in the horizontal direction,
wherein the third inner diameter is greater than the second inner diameter such that a gap is formed between the second can support part (162) and the battery can (4) when the first can support part (161) comes into contact with the battery can (4).

8. The crimping apparatus for the battery cell (2) as claimed in claims 5 to 7, wherein the beading insertion part (17) and the vertical extending surface (14) are located on a same horizontal line such that a force of the first upper jig (20) pressing the vertical extending surface (14) in the horizontal direction is applied toward a contact portion between the beading part (5) and the beading insertion part (17).

9. The crimping apparatus for the battery cell (2) as claimed in claims 5 to 8, wherein the vertical extending surface (14) comprises:
a first extending surface (141) which is formed below the inclined surface (13), horizontally comes into contact with the first upper jig (20) which is descending, and is located on a same horizontal line as the beading insertion part (17); and
a second extending surface (142) which is formed below the first extending surface (141) to have the same vertical length as the first extending surface (141) and horizontally comes into contact with a lower portion of the first upper jig (20) which has passed the first extending surface (141).

10. The crimping apparatus for the battery cell (2) as claimed in claims 1 to 9, wherein the first upper jig (20) comprises:
a first upper jig body (21) installed to be movable toward the lower jig (10);
a jig pressing surface (22) which is formed on an inner circumferential portion of the first upper jig body (21), and when descending, comes into contact with the lower jig (10) and presses the lower jig (10) toward the battery can (4);
an upper jig coupling part (27) which is formed at an upper portion of the first upper jig body (21) and to which the second upper jig (30) is fixed; and
an insertion space (28) which is formed between the jig pressing surface (22) and the second upper jig (30), which face each other, to be downwardly open and into which the lower jig (10) is inserted when the first upper jig body (21) descends.

11. The crimping apparatus for the battery cell (2) as claimed in claim 10, wherein the jig pressing surface (22) comprises:
an inclined pressing surface (23) formed on a lower portion of ethe inner circumferential portion of the first upper jig body (21) to be inclined, and when the first upper jig body (21) descends, comes into contact with an inclined surface (13) formed on the lower jig (10) and presses and moves the lower jig (10) toward the battery can (4); and
a horizontal pressing surface (24) which is formed above the inclined pressing surface (23) to extend vertically and is in contact with a vertical extending surface (14) formed on the lower jig (10) in a horizontal direction.

12. The crimping apparatus for the battery cell (2) as claimed in claims 1 to 11, wherein the second upper jig (30) comprises:
a second upper jig body (31) fixed inside the first upper jig (20);
a seating surface (32) which is formed at a lower end of the second upper jig body (31), is in contact with an upper surface of a can fixing part (15) formed on the lower jig (10) -, and has the same inner diameter as the can fixing part (15);
a downward pressing surface (33) which is formed inside the seating surface (32) to be concave upwardly and presses an upper end portion of the battery can (4) protruding upwardly from the can fixing part (15) toward the cap assembly (6); and
a rounded surface (34) which is formed between the seating surface (32) and the downward pressing surface (33) to be rounded and comes into contact with the upper end portion of the battery can (4) to bend or tilt the upper end portion of the battery can (4) toward the downward pressing surface (33).

13. The crimping apparatus for the battery cell (2) as claimed in claims 1 to 12, further comprising a guide unit (40) which guides the movement of the lower jig (10) toward the battery can (4),
wherein the guide unit (40) comprises:
a first housing (41) in which the lower jig (10) is seated;
a second housing (42) which is disposed on the first housing (41) with the lower jig (10) interposed therebetween and forms a guide surface (43), which guides the movement of the lower jig (10), between the second housing (42) and the first housing (41); and
a jig return device (44) which returns the lower jig (10) that has moved toward the battery can (4) to an initial position.

14. The crimping apparatus for the battery cell (2) as claimed in claim 13, wherein the first housing (41) comprises:
a first housing body (411) having a shape of a disk in which a hole (412) is formed in a central portion thereof; and
a first guide groove (413) which is formed to be recessed in an upper portion of the first housing body (411), through which the lower jig (10) passes, and which comes into contact with the lower jig (10) to guide radial movement of the lower jig (10),
wherein the second housing (42) comprises:
a second housing body (421) having a cylindrical shape allowing the first upper jig (20) to be inserted into the second housing body (421);
a descent guide surface (43) which is formed on an inner circumferential portion of the second housing body (421) and is in contact with an outer surface of the first upper jig (20) to guide the descent of the first upper jig (20); and
a second guide groove (423) which is formed to extend radially in a lower portion of the second housing body (421), through which the lower jig (10) passes, and which is in contact with the lower jig (10) to guide radial movement of the lower jig (10).

15. The crimping apparatus for the battery cell (2) as claimed in claim 13, wherein the jig return device (44) comprises:
a spring block (45) coupled to the lower jig (10) on a radial outer side of the second housing (42) and configured to move with the lower jig (10); and
an elastic member (46) which is disposed between the second housing (42) and the spring block (45) and elastically compressed in conjunction with the movement of the spring block (45) when the lower jig (10) moves toward the battery can (4).
